# EUROPÄISCHE PATENTSCHRIFT

(11) **EP 2 534 429 B1**
(45) Veröffentlichungstag und Bekanntmachung des Hinweises auf die Patenterteilung: **16.01.2019**
(21) Anmeldenummer: 11710409.1
(22) Anmeldetag: 10.02.2011
(51) Int. Cl.: F24S 50/80, F24S 50/20, F24S 23/74, F24S 20/20

(54) **REFLEKTOR**
REFLECTOR
RÉFLECTEUR

(30) Priorität: 14.07.2010 DE 102010027034; 01.07.2010 DE 102010025765; 10.02.2010 DE 102010007422
(43) Veröffentlichungstag der Anmeldung: 19.12.2012
(73) Patentinhaber: Kunz, Günther, 52066 Aachen (DE); Lorenz, Pierre, 46236 Bottrop (DE)
(72) Erfinder: Kunz, Günther, 52066 Aachen (DE); Lorenz, Pierre, 46236 Bottrop (DE)
(74) Vertreter: Castell, Klaus
(86) Internationale Anmeldenummer: PCT/DE2011/000123
(87) Internationale Veröffentlichungsnummer: WO 2011/098072

(56) Entgegenhaltungen:
- WO-A1-2007/087680
- WO-A2-2008/013976
- DE-U1- 8 514 766
- SU-A1- 1 002 750
- US-A- 4 678 292
- US-A1- 2008 073 198

## Beschreibung

Die Erfindung betrifft einen Reflektor für thermische Sonnenkollektoren.

Ein erster Aspekt der Erfindung betrifft einen Reflektor für einachsig konzentrierende thermische Sonnenkollektoren mit einem Paneel. Ein derartiger Reflektor wird vorzugsweise in linear konzentrierenden solarthermischen Kollektoren zum Sammeln von Sonnenstrahlung verwendet. Dabei wird einfallendes Sonnenlicht auf ein schmales Band, den Receiver, reflektiert. Der Receiver setzt die Strahlungsenergie in Wärmeenergie um. Ein Medium transportiert die Wärme zum Verbraucher.

Linear konzentrierende Reflektoren sind in einer Richtung konkav gewölbte spiegelnde Oberflächen. Je nach Anwendung folgen die Oberflächen konkreten mathematischen Funktionen. Diese Anwendungen sind Parabolrinnenkollektoren, Fresnel-Kollektoren und eingeschränkt auch zweiachsig gewölbte Kollektoren. Bei Parabolrinnenkollektoren folgt die Oberfläche des Reflektors einer Parabelfunktion. Bei Fresnel-Kollektoren ist die Funktion in kleinere Abschnitte mit der Länge des Kollektors eingeteilt, bei denen die Reflektoren entweder eben oder kreisförmig konkav gewölbt sind.

Bekannte Reflektoren bestehen entweder aus rückseitig verspiegeltem Glas oder aus einem oberflächenverspiegelten Material mit einer obligatorischen Schutzschicht gegen Witterungseinflüsse. Glasreflektoren werden aus zunächst ebenem Floatglas thermisch vorgespannt und rückseitig verspiegelt. Oberflächenverspiegelte Reflektoren entstehen durch Aufbringen einer Reflektorschicht auf einer dünnen Metallfolie. Diese wird dann auf eine formgenaue Unterlage aufgeklebt.

Bei thermisch gebogenen Glasreflektoren neigt das gebogene Glas zu einer nicht vermeidbaren Welligkeit der Reflektoren. Bei den oberflächenverspiegelten Reflektoren ist die Genauigkeit der gewünschten optimalen Flächenform durch die Genauigkeit der Unterkonstruktion bestimmt. Dabei steigt der konstruktive Aufwand mit den Genauigkeitsanforderungen.

Gattungsgemäße Reflektoren, bei denen das Paneel elastisch ist und Mittel aufweist, die von zwei gegenüberliegenden Seiten gegensinnige Biegemomente in das Paneel einleiten, sind aus der SU 1 002 750 A1, der WO 2008/013976 A2 und der US 2008/073198 A1 bekannt.

Der Erfindung liegt daher die Aufgabe zu Grunde, einen Reflektor bereit zu stellen, der einfach herstellbar ist und eine hohe Genauigkeit aufweist.

Diese Aufgabe wird mit einem Reflektor gelöst, der die Merkmale des Patentanspruchs 1 oder die Merkmale des Patentanspruchs 7 aufweist.

Aus der Statik eines Biegebalkens ist bekannt, dass ein konstantes Biegemoment am Ende eines Balkens ohne Einwirkung zusätzlicher äußerer Kräfte eine konstante Krümmung über die gesamte Länge des Balkens erzeugt. Der Balken verbiegt sich daher zunächst zu einem Bogen mit einem speziellen Radius, solange das Biegemoment unverändert auf den Balken einwirkt. Es ist auch möglich, dass man die Biegemomente ungleich groß macht, wenn man am jeweiligen Ende des Balkens zusätzliche äußere Querkräfte aufbringt. Diese bezeichnet man als Lagerkräfte. Dadurch kann ein Paneel so geformt werden, dass im Querschnitt die Form einer Parabel entsteht.

Außerdem ist es möglich, ein bereits plastisch vorgebogenes Paneel mit den gleichen Kräfteanordnungen zu einer neuen Biegelinie elastisch zu verformen. Ein plastisch vorgebogenes Paneel hat einen vorgegebenen Radius. Unter dem Einfluss äußerer Kräfte und Biegemomente verformt sich das Paneel elastisch zu einer neuen Biegelinie.

Dies erschließt die Möglichkeit, ein beliebig langes Paneel, bestehend aus mindestens einer reflektierenden Schicht, vorzugsweise ein Sandwich-Paneel, an den Seitenlinien parallel zur Biegeachse mit je einem gegensinnigen längslaufenden Biegemoment zu belasten. Die Biegemomente können dabei unterschiedlich groß sein.

Unter diesen Voraussetzungen werden zusätzliche Querkräfte induziert, die bei der Berechnung der Biegelinie berücksichtigt werden müssen. Sind die Biegemomente an den gegenüberliegenden Seiten gegensinnig gleich groß, ist das quer zur Biegeachse durchlaufende Biegemoment eine Konstante und verbiegt das Paneel exakt zu einem Kreisbogen. Sind die gegenüberliegenden Biegemomente ungleich groß, so wird der Biegemomentverlauf quer zur Biegeachse asymmetrisch und das Biegemoment ist eine lineare Funktion entlang der Richtung quer zur Biegeachse. Da die erste Ableitung des linearen Biegemoments eine Parabel in allgemeiner Lage darstellt, kann man durch Dimensionierung jede einachsig gewölbte Oberfläche des Paneels erzeugen, insbesondere auch einachsig gewölbte Reflektoren für die Anwendung in der konzentrierenden Solarthermie.

Um die notwendigen Biegemomente und Querkräfte auf das Paneel übertragen zu können, werden zusätzliche Mittel als konstruktive Elemente benötigt.

Je nach Anwendungsfall ist es daher vorteilhaft, wenn die Biegemomente unterschiedlich groß sind.

Dabei kann die reflektierende Schicht ein konstruktiver Bestandteil des Paneels sein oder formschlüssig auf das Paneel aufgebracht sein.

Eine erfindungsgemäße Ausführung sieht vor, dass auf jeder Paneelseite abgewinkelt, vorzugsweise lotrecht befestigte Hebel biegesteif angebracht sind, das Mittel ein in der Länge einstellbares Zug- oder Druckelement ist und über die Hebel Kräfte in das Paneel einleitet, die zwei gegensätzliche Biegemomente erzeugen und das Paneel zu einer gewünschten Biegelinie elastisch verbiegen.

Dabei ist es vorteilhaft, wenn die Druckkräfte von einer Spannkonstruktion aufgenommen werden.

Die abgewinkelten Hebel können je nach Anwendung unterschiedlich lang sein.

Eine andere Ausführungsform sieht vor, dass auf jeder Paneelseite torsionssteife Traversen angebracht sind und durch ein in der Länge einstellbares Mittel die Kräfte so eingeleitet werden, dass zwei gegensätzliche Biegemomente entstehen und die beiden Biegemomente das Paneel zu einer gewünschten Biegelinie elastisch verbiegen.

Dabei kann die Breite der beiden Traversen unterschiedlich sein.

Eine Ausführungsvariante sieht vor, dass das Mittel ein Druckelement ist und die Druckkräfte durch eine biegesteife Torsionstraverse aufgenommen werden. Eine andere Ausführungsform sieht vor, dass das Mittel ein in der Länge einstellbares Zugelement ist.

Eine besondere Ausführungsvariante sieht vor, dass in das als Zug- oder Druckelement ausgebildete Mittel ein Exzenter eingebaut ist und eine durch die Sonnennachführung bedingte Drehung eine an diese Drehung gekoppelte Radienvergrößerung des Reflektors durch den Exzenter erzeugt, wobei der Radius des Reflektors durch Verspannen des Druck- oder Zugelements individuell eingestellt wird.

Verschiedene Ausführungsformen derartiger Reflektoren sind in der Zeichnung dargestellt und werden im Folgenden näher beschrieben.

Es zeigt
- Figur 1: die Krafteinleitung durch befestigte Winkel,
- Figur 2: die Krafteinleitung durch torsionssteife Traversen,
- Figur 3: die Krafteinleitung durch ein Zug-Schraub-Element,
- Figur 4: einen Autofokus für einen Fresnel-Kollektor,
- Figur 5: einen Autofokus für ein Paneel mit Zugelement,
- Figur 6: eine Autofokusanordnung,
- Figur 7: unterschiedliche Exzenterstellungen,
- Figur 8 bis 10: die Ausbildung unterschiedlicher Traversen,
- Figur 11: schematisch einen Schnitt durch eine dezentrale Mechanik zum Einleiten eines Moments und
- Figur 12: schematisch einen Schnitt durch eine zentrale Mechanik zum Einleiten eines Moments.

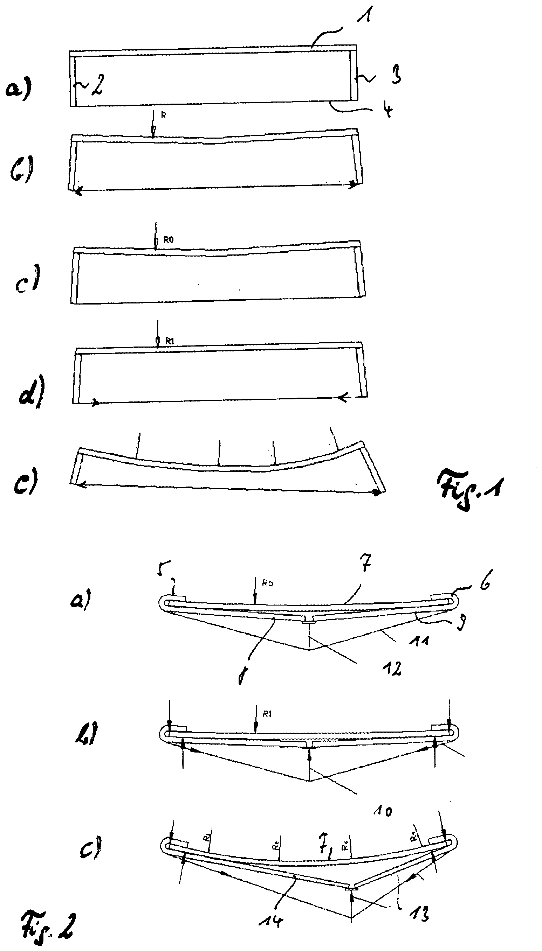

Die Figur 1 a zeigt einen geraden Biegebalken als Schnitt durch ein Paneel 1. An jedem Ende ist ein lotrecht angeordneter biegesteifer weiterer Balken 2, 3 angeordnet. Zwischen den Enden dieser Balken ist ein Zug-Druck-Element als Druck-Zug-Verbindung 4 vorgesehen. Verkürzt oder verlängert man dieses Element 4, so wird eine Kraft erzeugt, die über die Länge des lotrechten Balkens 2, 3 ein Biegemoment auf den waagerechten Biegebalken 1 (Paneel) erzeugt. Wegen der symmetrischen Anordnung läuft das resultierende Biegemoment mit konstanter Größe über den gesamten Balken und verbiegt den Balken zu einem Kreisbogen. Der Zug führt zu einer konvexen Krümmung und der Druck zu einer konkaven Krümmung. Der Radius eines bereits plastisch vorgebogenen Biegebalkens wird durch Zug oder Druck vergrößert oder verkleinert.

Werden die lotrecht angeordneten Biegebalken 2, 3 wie in Figur 1 e gezeigt verschieden lang ausgebildet, bildet sich eine asymmetrische Biegung aus. Die Gleichung dieser Biegelinie ist eine Parabel.

In Figur 2 a sind an beiden Enden 5, 6 eines plastisch vorgeformten Biegebalkens 7 mit konstantem Krümmungsradius R₀ zwei weitere biegesteife Balken 8, 9 so angeordnet, dass sie in der Funktionsweise einer Zange ähneln, wenn wie in Figur 2b eine Druckkraft 10 in der Mitte an den Enden der weiteren Balken 8 und 9 aufgebracht wird. Diese Druckkraft 10 erzeugt an den Enden 5, 6 des Paneels 7 ein gegenläufiges Biegemoment, das den ursprünglichen Radius R₀ zu dem größeren Radius R₁ verändert. Diese Kraft kann durch Zugverbindungen 11, die auf eine Druckverbindung 12 einwirken, noch verstärkt werden.

In Figur 2c ist dargestellt, dass der Biegebalken 7 durch die beiden zangenartigen Hebel 13, 14 asymmetrisch zu einer Parabel elastisch gebogen wird, wenn die Hebelarme 13, 14 unterschiedlich lang sind.

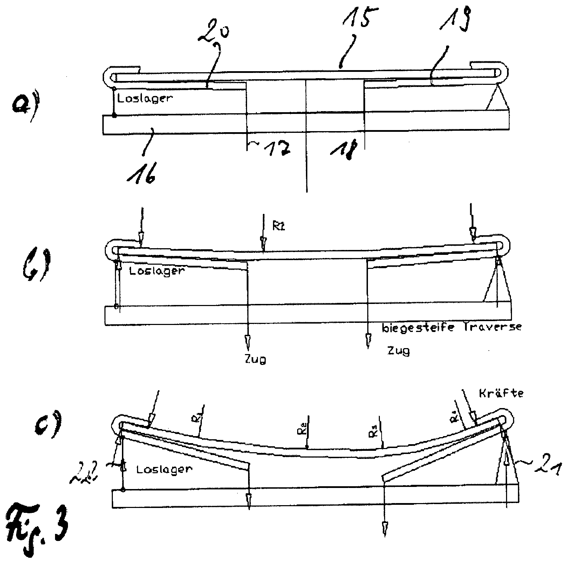

In Figur 3 a ist ein Paneel 15 dargestellt, das zunächst eben und plastisch nicht verformt ist. Um diesen geraden Balken 15 elastisch zu verformen, wird eine biegesteife Traverse 16 benötigt. Durch zwei symmetrisch angeordnete Zug-Schraub-Elemente 17, 18 können die Auslenkungen der zangenförmigen Biegebalken 19, 20 getrennt voneinander beeinflusst werden. Ein symmetrischer Zug an den Punkten 17 und 18 verformt den zunächst ebenen Biegebalken 15 zu einem Kreis mit konstantem Radius (vgl. Figur 3 c). Wenn jedoch unterschiedlich große Zugkräfte anliegen, verformt sich der Biegebalken asymmetrisch und wird zu einer Parabel, die durch genaue Einstellung die optimale Form eines Solarkollektors aufweist (vgl. Figur 3 c). Hierfür ist das Paneel 15 vorzugsweise auf einem Festlager 21 und einem Loslager 22 gelagert.

Mit den beschriebenen Vorrichtungen lassen sich präzise kreis- oder parabelförmige Spiegel für einachsig konzentrierende Kollektoren kostengünstig herstellen. Kreisförmige Spiegel sind für die Fresnel-Technik von großer Bedeutung. Beim Nachführen der Fresnelspiegel entsprechend dem Sonnenlauf tritt eine Verkürzung der Fokallänge ein, deren Größe an den Drehwinkel gekoppelt ist. Daraus folgt eine signifikante Leistungsminderung. Optimal sind daher Kollektoren, die der Sonne nachgeführt werden können und zusätzlich die Verkürzung der Fokallänge automatisch kompensieren. Daher wird anhand der folgenden Figuren eine automatische Sonnennachführung beschrieben, die diese Eigenschaften besitzt.

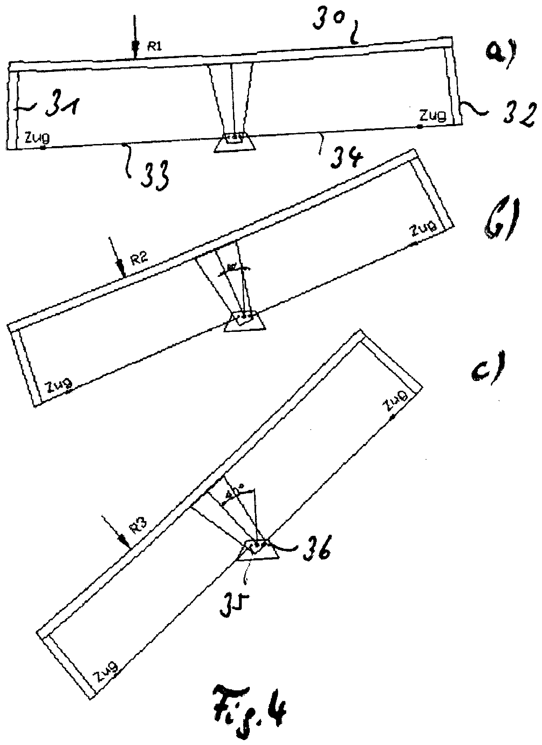

In Figur 4 ist ein Querschnitt durch einen beliebig langen Fresnel-Kollektor gezeigt. Ein plastisch konkav nach oben gebogener Biegebalken ist als Paneel an jedem Ende mit einem weiteren biegesteifen und lotrecht befestigtem Balken 31, 32 verbunden. Diese sind in einer Achse quer zur Blattebene genau so lang wie das Paneel 30. An einigen diskreten Stellen entlang dieser Achse quer zur Blattebene werden an diesen Balken 31, 32 bewegliche Zugelemente 33 bevorzugt als Drahtseile befestigt. Das andere Ende dieser Zugelemente 33, 34 ist an einem exzentrisch gelagerten Bolzen 35, 36 befestigt, so dass bei Drehung des Paneels 30 um eine Längsachse in Folge der Sonnennachführung eine Verkürzung der Strecke zwischen den sich gegenüberliegenden Balken 31, 32 und in Folge dessen eine erhöhte Zugspannung erzeugt wird. Die Längen der beiden Zugelemente 33, 34 bestimmen bei dieser Anordnung den Krümmungsradius des Paneels 30, der dadurch individuell eingestellt werden kann.

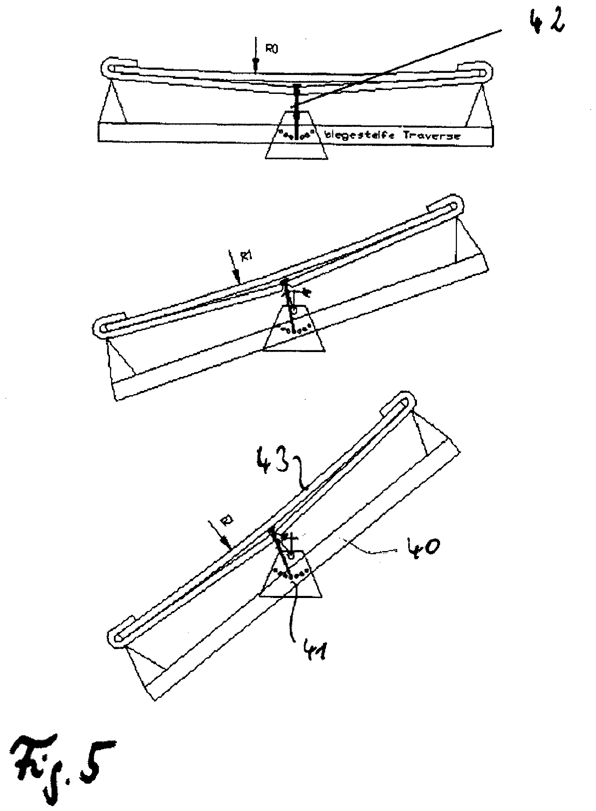

Dasselbe Prinzip kann auch für ein gebogenes Paneel verwendet werden wie es in Figur 3 dargestellt ist. Die entsprechende Anordnung ist in Figur 5 gezeigt. Hier liegt der Drehpunkt 40 exzentrisch zu einem Befestigungspunkt 41 eines Zugelementes 42. Je stärker die Drehung des Paneels 43 um den Drehpunkt 40 ist, desto schwächer wird der Zug am Zugelement und damit die Kraft auf das Paneel.

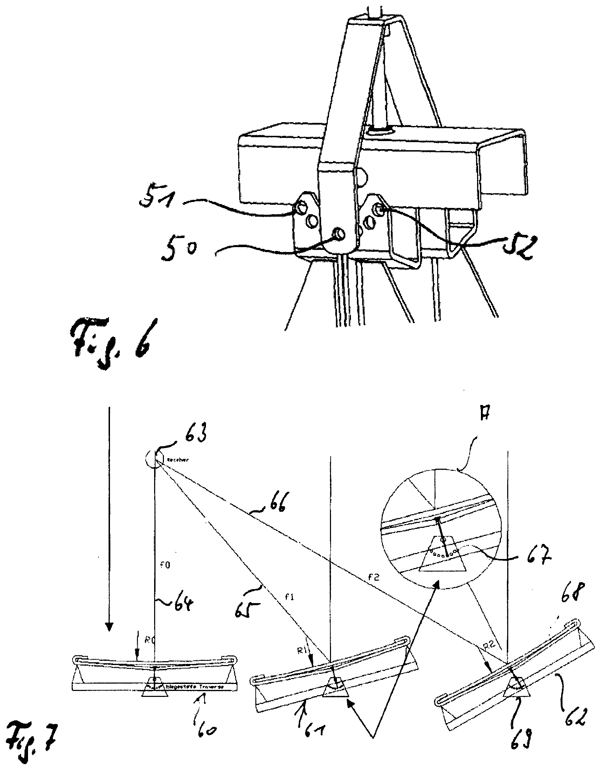

Eine Halterung zur Befestigung eines Paneels ist in Figur 6 gezeigt. Hierbei wird das Paneel um dem Drehpunkt 50 gedreht, während Zugelemente an den Bohrungen 51, 52 befestigt werden können.

Je nach Abstand zum Receiver gibt es für jeden Spiegel einen optimalen Spiegelradius. Das ist in Figur 7 dargestellt. Um mehrere Kollektoren 60, 61, 62 auf einen Receiver 63 auszurichten, müssen die Reflektoren mit unterschiedlichen Fokalabständen 64, 65, 66 unterschiedlich ausgerichtet sein. Dies ist durch die im Detail A gezeigte Exzenterverstellung realisiert. Mehrere Bohrungen 67 erlauben eine entsprechen Voreinstellung. Je nach Drehung des Paneels 68 relativ zur Halterung 69 wird somit die Krümmung des Paneels 68 und damit seine Fokussierung optimiert.

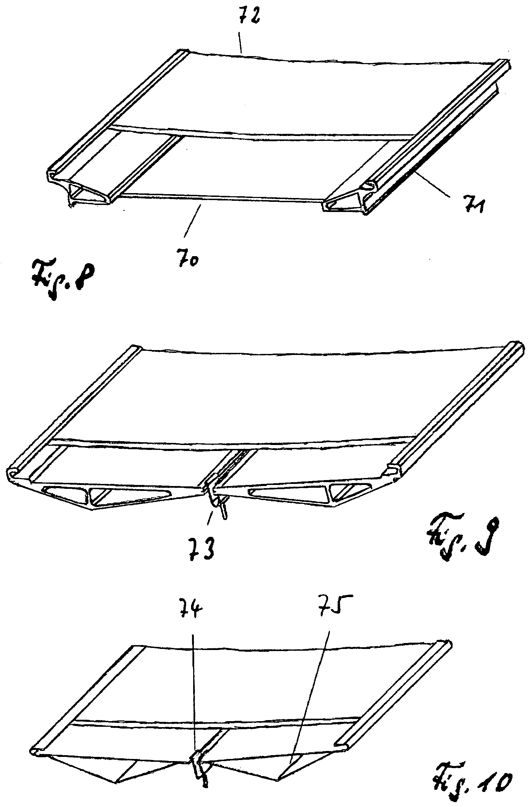

Da die Zugelemente 70 nur in diskreten Abständen an den lotrechten Biegebalken angreifen, müssen besonders torsionssteife Traversen 71 vorgesehen werden um das Paneel 72 ohne Verwindungen zu biegen. Daher eignet sich als Torsionstraverse 75 ein Kastenprofil, vorzugsweise aus Blech oder als Aluminium-Strang-Profil wie in den Figuren 8 bis 10 gezeigt.

Durch die Anzahl der Zug- oder Zug-Druck-Elemente 73, 74 in Längsrichtung und den Abstand der Elemente zueinander kann ebenfalls die Torsionssteifigkeit erhöht werden.

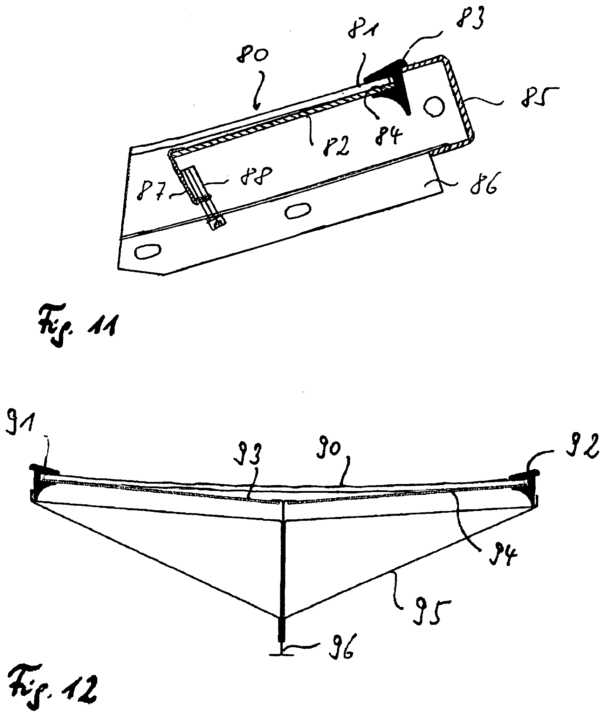

Die Figur 11 zeigt einen einfachen mechanischen Aufbau, mit dem ein Drehmoment am Rand eines Parabolspiegels 80 oder eines Fresenelelements eingeleitet werden kann. Hierzu ist der Rand 81 zusammen mit einem steifen Blech 82 in einer Nut 84 einer Klammer 83 gehalten. Der Nut 84 gegenüberliegend liegt die Klammer 83 auf einem Rahmen 85 auf, der an einer steifen Traverse 86 befestigt ist. An dem der Nut 84 gegenüberliegenden Ende des Blechs 82 zieht ein Haken 87 über eine Schraube 88 das Blech 82 zu Traverse 86. Hierbei können Haken 87 und Blech 82 sowie ggf. auch die Klammer 83 auch einstückig ausgebildet sein. Der Zug am Blech 82 führt zu einer Drehbewegung an der Klammer 83 und dadurch zu einer auf den Parabolspiegel 80 wirkenden Biegekraft, die den Parabolspiegel elastisch verformt.

Bei der in Figur 12 gezeigten Anordnung ist ein Fresnelelement 90 zwischen zwei Klammern 91 und 92 jeweils zusammen mit einem steifen Blech 93, 94 eingespannt. Die Klammern 91 und 92 liegen auf einer Haltekonstruktion 95 und die Bleche 93 und 94 werden an ihren den Klammern gegenüber liegenden Enden

Ein weiterer Aspekt betrifft eine Receiveranordnung für hochkonzentrierende, thermische Sonnenkollektoren mit einem Receiver, der innerhalb eines Schutzmantels angeordnet ist.

Receiver für hochkonzentrierende, thermische Sonnenkollektoren bestehen aus einem medienführenden Rohr, auf das die am Reflektor umgelenkten Sonnenstrahlen gebündelt werden. Strahlungsenergie wird auf dem Rohr in Wärme umgewandelt. Diese Wärme wird durch ein fließendes Medium zu Nutzzwecken abgeführt. Zum Schutz gegen Wärmeverluste des Receiverrohrs wird das Rohr zusätzlich mit einem Hühlrohr aus Glas ummantelt. Der Zwischenraum wird evakuiert. Dadurch werden Wärmeverluste durch Wärmeleitung herabgesetzt. Eigenstrahlungsverluste durch Wärmeabstrahlung des Receivers werden durch eine selektive Beschichtung reduziert. Mit zunehmender Temperatur nimmt der Effekt der Beschichtung aber ab, so dass ab einer gewissen Temperatur die selektive Beschichtung wirkungslos ist.

Es lag die Aufgabe zu Grunde, eine Receiveranordnung vorzuschlagen, die dieses Problem löst.

Diese Aufgabe wird mit einer gattungsgemäßen Receiveranordnung gelöst, bei der der Schutzmantel strahlungsundurchlässig ist und eine luftdicht verschlossene Öffnung aufweist, durch die Strahlung in das Innere des Schutzmantels eindringen kann. Der Receiver wird dadurch zu einem Hohlraumstrahler. Ein idealer Hohlraumstrahler ist ein geschlossener Raum mit hochabsorbierenden Innenwänden, idealer Wärmeisolierung und einer definierten Öffnung, die sich mit seiner Umgebung im Strahlungsaustausch befindet.

Es wird daher vorgeschlagen, dass die Innenseite des Schutzmantels strahlungsabsorbierend ausgebildet ist. Eine alternative Ausführungsform sieht vor, dass die Innenseite des Schutzmantels strahlungsreflektierend ausgebildet ist.

Der Wirkungsgrad der Receiveranordnung wird dadurch gesteigert, dass der Schutzmantel wärmeisoliert ist.

Eine besonders bevorzugte Ausführungsform sieht vor, dass in die Öffnung des Schutzmantels ein evakuierter, transparenter Hohlkörper vorzugsweise aus Glas eingesetzt ist. Hierbei ist es vorteilhaft, wenn in den evakuierten transparenten Hohlkörper ein drehbares Element eingesetzt ist, das in einer das Eindringen der Strahlung sperrende und in einer Strahlung durchlassenden Stellung anordenbar ist. Vorzugsweise sind dies zwei diskrete Stellungen, so dass das drehbare Element mit einem Schaltmittel jeweils in eine dieser Stellungen haltbar ist.

Hierzu wird vorgeschlagen, dass die Receiveranordnung einen außerhalb des evakuierten transparenten Hohlkörpers liegenden Magnet aufweist, mit dem die Stellung des Elements einstellbar ist. Kumulativ oder alternativ wird vorgeschlagen, dass sie ein Bimetall aufweist, das die Stellung des Elements temperaturabhängig selbsttätig einstellt.

Sofern wenig Strahlung von außen in die Receiveranordnung eindringen kann, wird vorgeschlagen, die Temperatur in der Receiveranordnung hoch zu halten, indem das Element auf der in der geschlossenen Stellung nach innen weisenden Seite strahlungsreflektierend ausgebildet ist.

Sofern verhindert werden soll, dass der Receiver überhitzt, kann das Element auf der in der geschlossenen Stellung nach außen weisenden Seite strahlungsreflektierend ausgebildet sein.

Sofern im Receiver ein wärmeleitendes, vorzugsweise flüssiges Medium erhitzt werden soll, wird vorgeschlagen, dass der Receiver mindestens ein Rohr aufweist. Dieses Rohr ist innerhalb des Schutzmantels angeordnet.

Es kann jedoch auch der Schutzmantel selber als Rohr dienen. Insbesondere zur Erhitzung gasförmiger Medien wird vorgeschlagen, dass der Receiver ein offen gebogenes Blech aufweist. Es können jedoch auch bereits die Innenseiten des Schutzmantels derart wärmeabsorbierend ausgebildet sein, dass auf eine Anordnung eines Receivers innerhalb des Schutzmantels verzichtet werden kann.

Ausführungsbeispiele derartiger Receiveranordnungen sind in der Zeichnung dargestellt und werden im Folgenden näher erläutert.

Es zeigt
- Figur 11: schematisch eine perspektivische Ansicht einer Receiveranordnung,
- Figur 12: schematisch eine perspektivische Ansicht der in Figur 11 gezeigten Receiveranordnung vergrößert mit geschlossenem drehbaren Element,

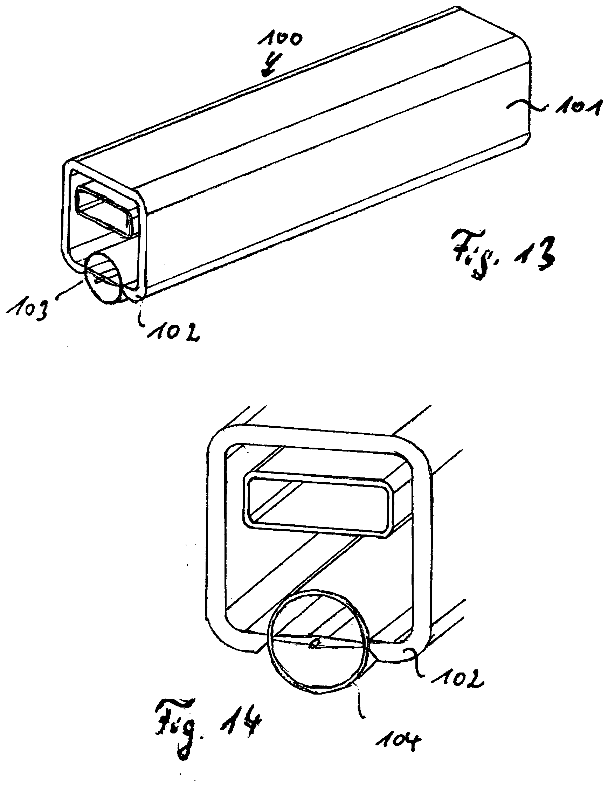

- Figur 13: eine Ansicht gemäß Figur 12 mit geöffnetem drehbaren Element,
- Figur 14: einen Schnitt durch eine Receiveranordnung nach Figur 11 mit geöffnetem drehbaren Element mit Darstellung von Strahlengängen,

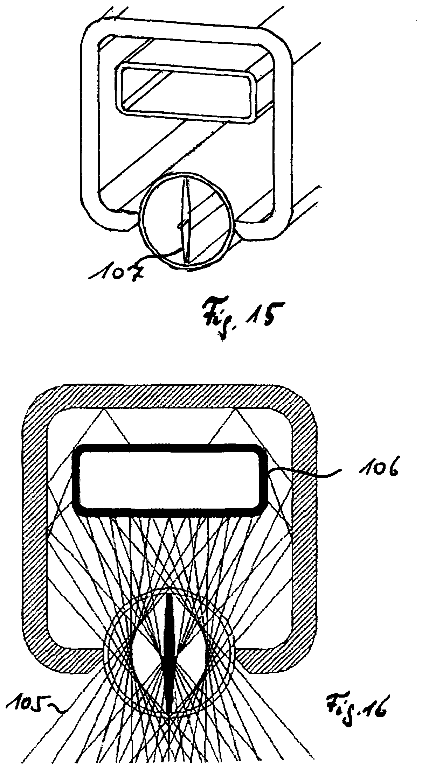

- Figur 15: einen Schnitt mit geschlossenem drehbaren Element,
- Figur 16: einen Schnitt mit geöffnetem drehbaren Element,

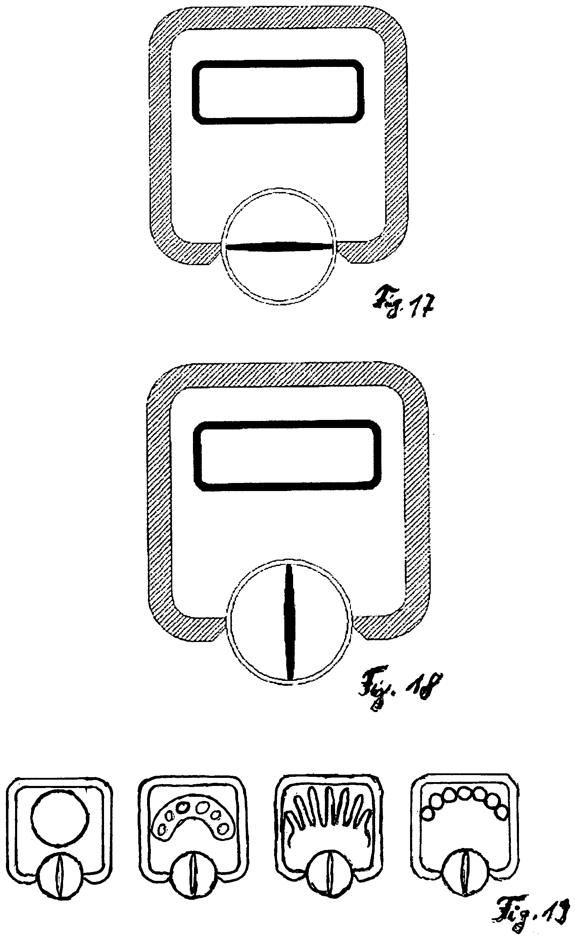

- Figur 17: Schnitte durch verschiedene Receiveranordnungen mit quadratischem Schutzmantel,
- Figur 18: Schnitte durch verschiedene Receiveranordnungen mit kreisförmigem Schutzmantel und
- Figur 19: Receiveranordnungen mit geöffnetem und geschlossenem drehbaren Element.

Die in Figur 11 gezeigte Receiveranordnung 100 besteht aus einem beliebig langen Hohlkörper 101 mit stark absorbierenden Innenwänden. Die Wände bestehen aus mehreren Schichten hochwertigen Isolationsmaterials und außen aus hochreflektierenden Blechen, die zusammen die Aufgabe haben, den Wärmeverlust zur Umgebung zu minimieren.

Die untere Wand 102 hat einen Schlitz 103. In diesem Schlitz sind an beiden Enden verschlossene und evakuierte Glasröhren 104 geringer Länge eingelegt. Diese lassen die einfallende konzentrierte Strahlung 105 ungehindert in das Innere des Hohlkörpers 101 eindringen. Dort trifft die Strahlung auf den eigentlichen Receiver 106. Dieser kann als medienführendes Hohlprofil ausgebildet sein. Es kann jedoch auch ein Receiver eingesetzt werden, der von einem Körper gebildet wird, der einerseits die Strahlung gut absorbiert und andererseits die entstehende Wärme an ein strömendes Medium wieder abgeben kann. Ausführungsvarianten derartiger Receiver sind in den Figuren 17 und 18 dargestellt.

In den Glasröhren 104 sind drehbare Reflektoren 107 eingelegt, die sich ohne Drehdurchführung und berührungslos von außen nach Bedarf in eine vertikale oder eine horizontale Stellung bringen lassen. Dies geschieht vorzugsweise durch Magnetkraft. Eine Alternative sieht ein Bimetallelement vor, das auf die Receivertemperatur reagiert und bei einer bestimmten Temperatur von einer waagerechten in eine vertikale Stellung umschaltet. Das Bimetallelement kann dabei im Hohlraum des Schutzmantels 101 angeordnet sein um je nach Hohlraumtemperatur auf das drehbare Element einzuwirken.

Eine spezielle Ausführungsform einer Receiveranordnung für zweiachsig konzentrierende Kollektorsysteme ist in Figur 19 dargestellt. Anstelle des langgestreckten Hohlkörperreceivers tritt hier ein rotationssymmetrischer Hohlzylinder 108 mit einer kreisförmigen Öffnung 109 an seiner Unterseite 110. In diese Öffnung 109 ist eine evakuierte Hohlkugel 111 aus Glas eingelegt, die ebenfalls einen drehbaren Reflektor 112 als drehbares Element zum Verschließen der Öffnung 109 gegen eindringende Strahlung aufweist.

Derartige Receiver haben eine Vielzahl an Vorteilen gegenüber bekannten Receivern. Insbesondere können auch in Nachtzeiten in der Receiveranordnung Temperaturen aufrecht erhalten werden, die ein Thermoöl flüssig halten. Durch das Zurückverlegen der wirksamen Receiveroberfläche von der Fokuszone kann die Leistungsübertragungsfläche vergrößert werden, wodurch eine Reduzierung der Leistungsdichte erzielt wird.

Ein dritter Aspekt der Erfindung betrifft einen Sensor für einachsige und zweiachsige konzentrierende, thermische Sonnenkollektoren. Mit Hilfe eines derartigen Sensors kann man einerseits die Genauigkeit von Reflektoroberflächen messtechnisch berührungslos erfassen und andererseits eine äußerst präzise Sonnennachführung realisieren.

Der Erfindung liegt daher die Aufgabe zu Grunde, einen derartigen Sensor weiterzuentwickeln.

Diese Aufgabe wird mit einem gattungsgemäßen Sensor dadurch gelöst, dass er einen Hohlkörper aufweist, in dem eine Fotozelle angeordnet ist, und der eine Öffnung aufweist, in der ein lichtdurchlässiger Streukörper angeordnet ist, wobei die Außenseite des Hohlkörpers strahlungsreflektierend ausgebildet ist.

Dabei kann der Hohlkörper an seiner Innenseite die auftreffenden Lichtstrahlen vollständig absorbieren. Realisieren kann man dies mittels matter, schwarzer Innenflächen. Der vorzugsweise in eine dünne Wand eingelassene Streukörper wirkt auf der Oberseite der Wand als punktförmige Lichtquelle. Der Streukörper soll daher so ausgebildet sein, dass er die auf der Außenseite auf ihn auftreffenden Strahlen extrem streut. Dies kann man realisieren, indem man ein Glas mit hohem optischen Brechungsindex durch Sandstrahlen aufraut, wobei die physikalische Beschaffenheit des Strahlmittels und die Auftreffgeschwindigkeit optimiert sein müssen, um einen hohen Streueffekt erreichen zu können.

Je nach Anwendungsgebiet ist der Streukörper kugelförmig oder zylinderförmig. Verschiedene Ausführungsvarianten sehen vor, dass der Hohlkörper eine kastenförmige Innenform, eine zylinderförmige Innenform oder eine konische Innenform hat.

Eine besondere Ausführungsform sieht vor, dass der Hohlkörper zwei Fotozellen aufweist. Insbesondere wenn der Hohlkörper zwei Fotozellen aufweist, ist es weiterhin vorteilhaft, wenn der Hohlkörper zwei lichtdurchlässige Streukörper aufweist.

Eine spezielle Anordnung mit einem gattungsgemäßen Sensor sieht vor, dass der Sensor so angeordnet ist, dass der Streukörper derart positioniert ist, dass er von der Sonnenrichtung abgewandt, der reflektierenden Fläche aber zugewandt ist. Dies ermöglicht ein Verfahren, bei dem der thermische Sonnenkollektor in Abhängigkeit von der Lichtintensität am Sensor positioniert wird.

Unterschiedliche Ausführungsvarianten derartiger Sensoren sind in der Zeichnung dargestellt und werden im Folgenden näher erläutert.

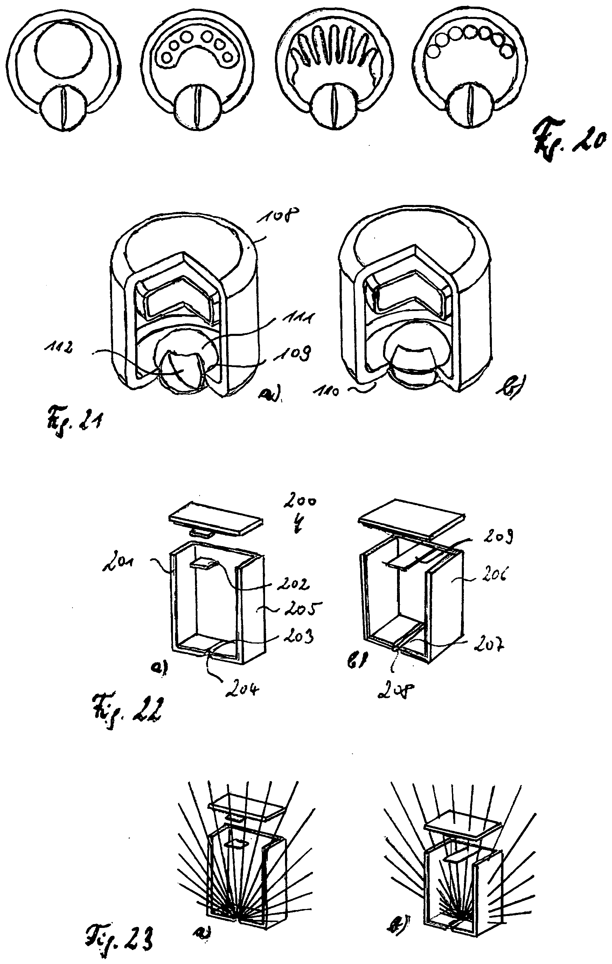

Es zeigt
- Figur 20: schematisch geöffnete Sensoren für punkt- und linienförmige Streukörper,
- Figur 21: eine Darstellung gemäß Figur 20 mit eingezeichneten Strahlengängen,
- Figur 22: eine Abbildung gemäß Figur 20 mit den für das Photoelement relevanten Strahlengängen,
- Figur 23: die Funktion unterschiedlicher Streukörper,

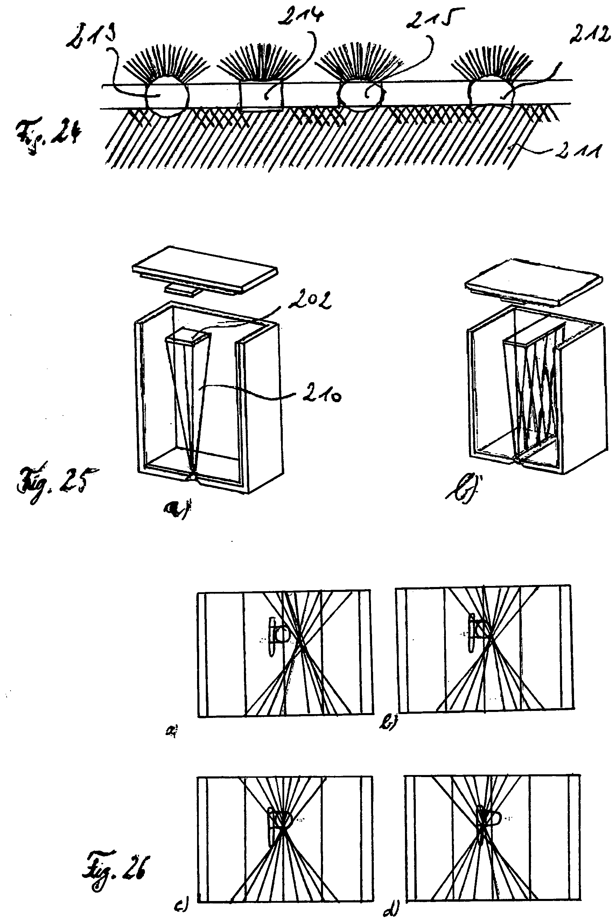

- Figur 24: schematisch die Bewegung des Sensors durch den Fokus,
- Figur 25: eine grafische Darstellung der Intensität der Fotozelle über der Zeit,
- Figur 26: einen geöffneten Sensor mit zwei Streukörpern und zwei Fotozellen,

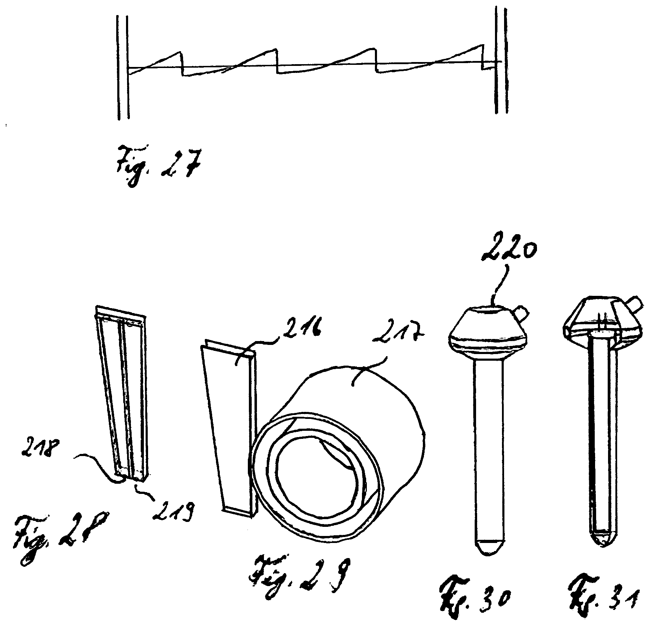

- Figur 27: schematisch einen an einem Receiver befestigten Sensor nach Figur 26,
- Figur 28: eine alternative Ausführungsform eines Sensors und
- Figur 29: einen Schnitt durch den in Figur 28 gezeigten Sensor.

Der in Figur 20 a gezeigte Sensor 200 weist einen Hohlkörper 201 auf, in dem eine Fotozelle 202 angeordnet ist. Am Boden des Hohlkörpers 201 ist eine punktförmige Öffnung 203 mit einem kugelförmigen Streukörper 204. Die Außenseite 205 des Hohlkörpers 201 ist strahlungsreflektierend ausgebildet, so dass nur durch die Öffnung 203 Strahlung in das Innere des Hohlkörpers 201 eindringen kann.

Die Figur 20b zeigt eine entsprechende Anordnung eines Hohlkörpers 206 mit einem länglichen Spalt 207 und einem zylindrischen Streukörper 208.

Wie in den Figuren 21 und 22 gezeigt, bewirkt der Streukörper, dass eine sehr hohe Strahlungsintensität außerhalb des Hohlkörpers 201, 206 zu einer sehr schwachen aber proportionalen Strahlungsintensität innerhalb des Hohlkörpers führt.

Die Intensität der Lichtquelle, die der Streukörper 204, 208 innerhalb des Hohlkörpers 201, 206 bildet, nimmt mit dem Quadrat des Abstandes der Fotozelle 202, 209 zur Lichtquelle ab. Alle Strahlen, die auf die optisch schwarzen Innenwände des Hohlkörpers 201, 206 treffen, werden dort absorbiert. Auf die Fotozelle 202, 209 am oberen Ende des Hohlkörpers 201, 206 trifft somit nach klaren geometrischen Relationen ein Bruchteil der ursprünglichen Strahlung.

Die Figur 22 a zeigt, dass die Strahlenquelle mit der Fotozelle 202 ein konisches Raumelement 210 bildet. Somit ist die erzeugte elektrische Spannung an der Fotozelle 202 proportional zu der äußeren Strahlungsintensität aber sehr stark abgeschwächt.

Die Figur 23 zeigt, wie bei kugelförmigen oder langgestreckten Streukörpern von unten einfallendes Licht 211 beim Durchgang durch einen Streukörper 212 gestreut wird. Hierzu werden verschiedene Streukörpergeometrien als Streukörper 213, 214, 215 dargestellt. Von unten eintreffendes Licht 211 mit einer sehr hohen Strahlungsintensität wird zunächst an der unteren optisch rauen Oberfläche gestreut und zu einem geringeren aber festen Prozentsatz in den Glaskörper geleitet. Dort treffen die gestreuten Strahlen auf die ebenfalls optisch raue Oberfläche des Streukörpers an der Innenseite des Hohlkörpers 201, 206 und werden dort erneut nach allen Seiten gestreut. Nur ein kleiner aber fester Prozentanteil gelangt über die Streuung in den Innenraum des Hohlkörpers. Je länger der Abstand zwischen Strahlungseintritt und Fotozelle ist, desto geringer ist die Intensität an der Fotozelle 202.

Wenn ein derartiger Sensor in der Nähe eines Brennpunktes oder einer Brennlinie eines Sonnenkollektors befestigt wird, kann man durch Drehen der Anordnung erreichen, dass der äußere Teil des Streukörpers den gesamten Lichtkegel oder das Lichtprisma durchwandert. Ein Beispiel hierfür ist in den Figuren 24 a - d dargestellt. Dabei registriert die Fotozelle im Sensor ein der Lichtintensität proportionales Signal. Bei Reflektorformabweichungen gibt es in der Nähe des Brennpunktes oder der Brennlinie Verdichtungen und Absenkungen der Lichtintensität.

Mit zwei mit dem Sensor registrierten Funktionen der Intensität über dem Drehwinkel bei verschiedenen Radien ist es möglich, eine Aussage über die Formgenauigkeit der jeweiligen Reflektoroberflächen zu machen. Dadurch kann auf einfache Art und Weise die Qualität von Reflektoren gemessen werden.

Eine weitere Anwendung des Sensors liegt in seiner Funktion als Messwertaufnehmer für die Sonnennachführung. Befestigt man einen Sensor in der Nähe des Brennpunktes oder der Brennlinie so, dass der relativ kleine und damit punktuell oder linienförmige Streukörper bei exakter Drehstellung des Reflektors soeben die Flanke des Lichtkegels bzw. des Lichtprismas berührt, so führt ein Weiterwandern der Sonne dazu, dass der Streukörper in die sehr strahlungsintensive Zone eintritt. Der Sensor registriert dann einen plötzlichen Spannungsanstieg. Wenn die Spannung einen gewissen Betrag überschreitet, wird über ein Relais ein Motor angesteuert, der die Anordnung von Sensor und Kollektor so dreht, dass sich der Streukörper wieder außerhalb der lichtintensiven Zone befindet. Folglich fällt dann die registrierte Spannung auf null ab und der Motor bleibt stehen.

Durch eine sehr einfache elektronische Schaltung kann man erreichen, dass eine sogenannte Hysterese auftritt. Das heißt, die Triggerschwelle für das Ein- und Ausschalten sind voneinander verschieden.

In Figur 24 a befindet sich der Streukörper bei exakter Winkelstellung in einem sehr geringen Abstand zum Lichtprisma. Beim Weiterwandern der Sonne dringt der Streukörper in das Prisma ein und der Motor wird eingeschaltet bis die Spannung an der Fotozelle wieder auf null ist.

Durch Verringern der Hysterese kann man die Genauigkeit der Nachführung beliebig genau machen. Im Grenzfall wird bei Hysterese null unendlich oft nachgesteuert. Um dieses zu häufige Nachregulieren im vernünftigen Maße einzuregeln, braucht man nur die Hysterese zu vergrößern. Dann läuft der Motor noch eine Zeit lang nach und der Streukörper befindet sich beim Abschalten in einer definierten Distanz zum Lichtprisma. Der Vorgang benötigt dann eine gewisse Zeit, bis durch Weiterwandern der Sonne der Streukörper wieder die Lichtflanke berührt.

Weil ein proportionaler Zusammenhang zwischen dem Zeitintervall der Schaltvorgänge besteht, wird dadurch die Genauigkeit der Nachführung determiniert. Die Intensität über der Zeit ist in der Figur 25 dargestellt. Durch Verringern der Hysterese kann die Genauigkeit auf 0,01° Grad gesteigert werden. In diesem Fall beträgt das Zeitintervall nur noch 10 Sekunden.

Vorteilhaft ist es, wenn die beschriebene Art der Sonnennachführung mit einer terrestrischen Steuerung gekoppelt wird. Die terrestrische Steuerung basiert auf der Möglichkeit, den exakten Sonnenstand der Jahreszeit und der geografischen Breite zu berechnen. Eine exakte Steuerung nur nach dem terrestrischen Prinzip würde sehr hohe Kosten bei der Justierung aller möglichen Toleranzen nach sich ziehen.

Daher wird vorteilhafter Weise bei der Steuerung eine Fallunterscheidung vorgenommen. Bei Abwesenheit von Sonne wird die terrestrische Steuerung so eingestellt, dass der Reflektor immer der unsichtbaren Sonne ein Stück voraus eilt. Wenn die Sonne witterungsbedingt wieder scheint, wird von der terrestrischen Steuerung auf Sensorsteuerung umgeschaltet. Entsprechend dem gewählten Vorlauf wird ein bestimmtes Zeitintervall benötigt, bis der Sensor wieder in die Lichtflanke eintaucht. Danach übernimmt der Sensor die Nachführung mit der erforderlichen Genauigkeit.

Die Figuren 26 und 27 zeigen einen vorteilhaften Sensor 216 in der Nähe eines Receiverrohres 217. Durch die beiden hintereinander angebrachten Streukörper 218, 219 können im Bedarfsfall unterschiedliche Steuerungsgenauigkeiten erzielt werden, je nach dem, welches Signal ausgewertet wird.

Ein einfacher Sensor 220 ist in den Figuren 28 und 29 abgebildet.

Ein länglicher Streukörper gemäß den Figuren 20b, 21b und 22b hat gegenüber einem kugelförmigen Streukörper den Vorteil, dass partielle Verschattungen durch Konstruktionsteile der Receiverbefestigung ausgeglichen werden.

## Patentansprüche

1. Reflektor für einachsig konzentrierende thermische Sonnenkollektoren mit einem Paneel (1), das elastisch ist und Mittel (11, 12) aufweist, die von zwei gegenüberliegenden Seiten gegensinnige Biegemomente in das Paneel (1) einleiten, ***dadurch gekennzeichnet, dass*** auf jeder Paneelseite abgewinkelt, vorzugsweise lotrecht, befestigte Hebel (13, 14) biegesteif angebracht sind, das Mittel ein in der Länge einstellbares Zug- oder Druckelement (11, 12) ist und über die Hebel (13, 14) Kräfte in das Paneel einleitet, die zwei gegensätzliche Biegemomente erzeugen und das Paneel (1) zu einer gewünschten Biegelinie elastisch verbiegen.

2. Reflektor nach Anspruch 1, ***dadurch gekennzeichnet, dass*** die Biegemomente unterschiedlich groß sind.

3. Reflektor nach einem der vorhergehenden Ansprüche, ***dadurch gekennzeichnet, dass*** eine reflektierende Schicht konstruktiver Bestandteil des Paneels (1) ist.

4. Reflektor nach einem der Ansprüche 1 oder 2, ***dadurch gekennzeichnet, dass*** eine reflektierende Schicht formschlüssig auf das Paneel (1) aufgebracht ist.

5. Reflektor nach einem der vorhergehenden Ansprüche, ***dadurch gekennzeichnet, dass*** die Druckkräfte von einer Spannkonstruktion aufgenommen werden.

6. Reflektor nach Anspruch 5, ***dadurch gekennzeichnet, dass*** die abgewinkelten Hebel (13, 14) unterschiedlich lang sind.

7. Reflektor für einachsig konzentrierende thermische Sonnenkollektoren mit einem Paneel (1), das elastisch ist und Mittel (11, 12) aufweist, die von zwei gegenüberliegenden Seiten gegensinnige Biegemomente in das Paneel (1) einleiten, ***dadurch gekennzeichnet, dass*** auf jeder Paneelseite torsionssteife Traversen (71) angebracht sind und durch ein in der Länge einstellbares Mittel (70, 73 74) die Kräfte so eingeleitet werden, dass zwei gegensätzliche Biegemomente entstehen und die beiden Biegemomente das Paneel (72) zu einer gewünschten Biegelinie elastisch verbiegen.

8. Reflektor nach Anspruch 7, ***dadurch gekennzeichnet, dass*** die Breite der beiden Traversen (71) unterschiedlich ist.

9. Reflektor nach Anspruch 7 oder 8, ***dadurch gekennzeichnet, dass*** das Mittel ein Druckelement ist und die Druckkräfte durch eine biegesteife Torsionstraverse (71) aufgenommen werden.

10. Reflektor nach einem der Ansprüche 7 oder 8, ***dadurch gekennzeichnet, dass*** das Mittel ein in der Länge einstellbares Zugelement ist.

11. Reflektor nach einem der vorhergehenden Ansprüche, ***dadurch gekennzeichnet, dass*** in das als Zug- oder Druckelement ausgebildete Mittel ein Excenter eingebaut ist und eine durch die Sonnennachführung bedingte Drehung eine an diese Drehung gekoppelte Radienvergrößerung des Reflektors durch den Excenter erzeugt, wobei der Radius des Reflektors durch Verspannen des Druck- oder Zugelementes individuell eingestellt wird.

## Claims

1. A reflector for uniaxially concentrating thermal solar collectors, comprising a panel (1) which is elastic and comprises means (11, 12) that introduce oppositely directed bending moments from two opposite sides into the panel (1), **characterised in that** levers (13, 14) that are attached at an angle, preferably attached perpendicular, are affixed on every panel side, in a flexurally rigid manner, the means is a tension or compression element (11, 12) that is adjustable in length and by way of the levers (13, 14) introduces forces into the panel which produce two opposing bending moments and elastically bend the panel (1) to produce a desired bending line.

2. The reflector according to claim 1, ***characterised in that*** the bending moments are of different magnitudes.

3. The reflector according to either one of the preceding claims, ***characterised in that*** a reflective layer is a design component of the panel (1).

4. The reflector according to either one of claims 1 or 2, ***characterised in that*** a reflective layer is applied to the panel (1) in form-fitting manner.

5. The reflector according to any one of the preceding claims, ***characterised in that*** the compressive forces are taken up by a tensioning structure.

6. The reflector according to claim 5, ***characterised in that*** the angled levers (13, 14) are of different lengths.

7. A reflector for uniaxially concentrating thermal solar collectors, comprising a panel (1) which is elastic and comprises means (11, 12) that introduce oppositely directed bending moments into the panel (1) from two opposite sides, **characterised in that** torsionally rigid traverses (71) are affixed on every panel side and the forces are introduced by a means (70, 73, 74) that is adjustable in length, in such a manner that two opposing bending moments occur, and the two bending moments elastically bend the panel (72) to produce a desired bending line.

8. The reflector according to claim 7, ***characterised in that*** the width of the two traverses (71) is different.

9. The reflector according to claim 7 or 8, ***characterised in that*** the means is a compression element and the compressive forces are taken up by a flexurally rigid torsion traverse (71).

10. The reflector according to any one of claims 7 or 8, ***characterised in that*** the means is a tension element that is adjustable in length.

11. The reflector according to any one of the preceding claims, ***characterised in that*** a cam is installed in the means configured as a tension or compression element and a rotation brought about by sun tracking produces a radius enlargement of the reflector by means of the cam, coupled with this rotation, wherein the radius of the reflector is individually adjusted by tensing of the compression or tension element.

## Revendications

1. Réflecteur, destiné à des collecteurs solaires thermiques à concentration uniaxiale, pourvu d'un panneau (1), qui est élastique et qui comporte des moyens (11, 12) qui à partir de deux côtés opposés introduisent des couples de flexion en sens inverse dans le panneau (1), **caractérisé en ce que** sur chaque face du panneau, des leviers (13, 14) fixés de manière coudée, de préférence à la perpendiculaire sont montés de manière rigide en flexion, **en ce que** le moyen est un élément de traction ou de pression (11, 12) réglable en longueur et par l'intermédiaire des leviers (13, 14), introduit dans le panneau des efforts, qui créent deux couples de flexion contraires et qui courbent élastiquement le panneau (1) en une ligne de flexion souhaitée.

2. Réflecteur selon la revendication 1, ***caractérisé en ce que*** les couples de flexion sont de dimensions différentes.

3. Réflecteur selon l'une quelconque des revendications précédentes, ***caractérisé en ce qu***'une couche réfléchissante est un élément constructif du panneau (1).

4. Réflecteur selon l'une quelconque des revendications 1 ou 2, ***caractérisé en ce qu***'une couche réfléchissante est appliquée par complémentarité de forme sur le panneau (1).

5. Réflecteur selon l'une quelconque des revendications précédentes, ***caractérisé en ce que*** les forces de compression sont absorbées par une structure tendue.

6. Réflecteur selon la revendication 5, ***caractérisé en ce que*** les leviers (13, 14) coudés sont de différentes longueurs.

7. Réflecteur, destiné à des collecteurs solaires thermiques à concentration uniaxiale, pourvu d'un panneau (1), qui est élastique et qui comporte des moyens (11, 12) qui à partir de deux côtés opposés introduisent des couples de flexion en sens inverse dans le panneau (1), ***caractérisé en ce que*** sur chaque face du panneau sont montées des traverses (71) rigides en flexion et **en ce que** par un moyen (70, 73, 74) réglable en longueur, les efforts sont introduits de sorte à donner naissance à deux couples de flexion contraires et **en ce que** les deux couples de flexion courbent élastiquement le panneau (72) en une ligne de flexion souhaitée.

8. Réflecteur selon la revendication 7, ***caractérisé en ce que*** la largeur des deux traverses (71) est différente.

9. Réflecteur selon la revendication 7 ou 8, ***caractérisé en ce que*** le moyen est un élément de pression et **en ce que** les forces de compression sont absorbées par une traverse de torsion (71) rigide à la flexion.

10. Réflecteur selon l'une quelconque des revendications 7 ou 8, ***caractérisé en ce que*** le moyen est un élément de traction réglable en longueur.

11. Réflecteur selon l'une quelconque des revendications précédentes, ***caractérisé en ce que*** dans le moyen conçu en tant qu'élément de traction ou de pression est incorporé un excentrique et **en ce qu'**une rotation due au suivi du soleil créé une augmentation du rayon du réflecteur couplée à ladite rotation par l'excentrique, le rayon du réflecteur étant réglé individuellement par contrainte de l'élément de pression ou de traction.
